# DEMANDE DE BREVET EUROPEEN

(11) **EP 0 623 526 A1**
(43) Date de publication de la demande: **09.11.1994**
(21) Numéro de dépôt: 94400975.2
(22) Date de dépôt: 04.05.1994
(51) Int. Cl.: B65D 81/32, B65D 1/04

(54) **Récipient pour le transport et le mélange de produits quelconques**

(30) Priorité: 06.05.1993 FR 9305455
(71) Demandeur: CONDITIONNEMENT ASEPTIE CONSEILS " C.A.C.", F-28500 Cherisy (FR)
(72) Inventeur: Lemaire, Didier Victor, F-28500 Cherisy (FR)
(74) Mandataire: Durand, Yves Armand Louis

(57) **Abrégé**

La présente invention concerne un récipient pour le transport et le mélange de produits quelconques.

Ce récipient comporte au moins deux compartiments (1, 2) obturés par un opercule (7) et susceptibles de déboucher dans un goulot (3) commun aux deux compartiments (1, 2) et obturable par un bouchon (4), le goulot (3) et le bouchon (4) formant une zone de communication entre les deux compartiments (1,2) lorsque l'opercule (7) est retiré, pour permettre le mélange des produits.

Ce récipient permet le transport et le mélange avant utilisation de produits quelconques tels que de l'eau et des sirops.

## Description

La présente invention a essentiellement pour objet un récipient permettant le transport et le mélange de produits quelconques, tels que par exemple des produits alimentaires ou pharmaceutiques.

D'une manière générale, il a déjà été proposé des récipients à plusieurs compartiments susceptibles de contenir chacun un produit différent.

Ce genre de récipient est notamment utile pour le transport de produits qui doivent être mélangés immédiatement avant utilisation.

Toutefois, il n'a pas été proposé jusqu'à maintenant un récipient permettant de réaliser à la fois le transport des produits isolés les uns des autres ainsi que leur mélange au dernier moment, c'est-à-dire juste avant l'utilisation.

Aussi, la présente invention a pour but de combler cette lacune en proposant un nouveau récipient permettant de transporter plusieurs produits et fonctionnant à la manière d'un shaker pour permettre le mélange des produits juste avant l'utilisation.

A cette effet, l'invention a pour objet un récipient pour le transport et le mélange de produits quelconques et du type comprenant au moins deux compartiments aptes à recevoir chacun un produit à mélanger avec le produit se trouvant dans l'autre compartiment, caractérisé en ce que les deux compartiments débouchent dans une partie du récipient formant zone de communication entre ces deux compartiments.

La zone de communication précitée est avantageusement constituée par un goulot commun aux deux compartiments et obturé par un bouchon amovible.

Suivant une autre caractéristique de ce récipient, les orifices débouchants des deux compartiments sont obturés par un système de fermeture situé à l'intérieur du goulot.

Ce système de fermeture peut être un opercule scellé.

On précisera ici que l'opercule en question est scellé sur une surface transversale au goulot et comportant les orifices débouchants précités.

Selon encore une autre caractéristique de l'invention, l'un des compartiments du récipient peut former une poignée de manutention de celui-ci.

Le récipient selon cette invention peut être réalisé en verre ou toute matière synthétique appropriée, et dans ce cas, il peut être obtenu par extrusion-soufflage.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue en élévation d'un récipient conforme aux principes de l'invention.

La figure 2 est une vue en plan et de dessus suivant la flèche II du récipient de la figure 1, bouchon et opercule enlevés.

La figure 3 est une vue partielle et en perspective de la partie supérieure du récipient, bouchon enlevé.

Suivant un exemple de réalisation, et en se reportant aux figures, on voit qu'un récipient conforme à l'invention, réalisé en verre ou toute matière synthétique appropriée, est formé de deux compartiments 1, 2 aptes à recevoir chacun un produit différent et quelconque, ces deux compartiments pouvant déboucher dans la partie supérieure du récipient formant un goulot 3 qui est commun aux deux compartiments 1, 2 et qui est obturable par un bouchon amovible 4.

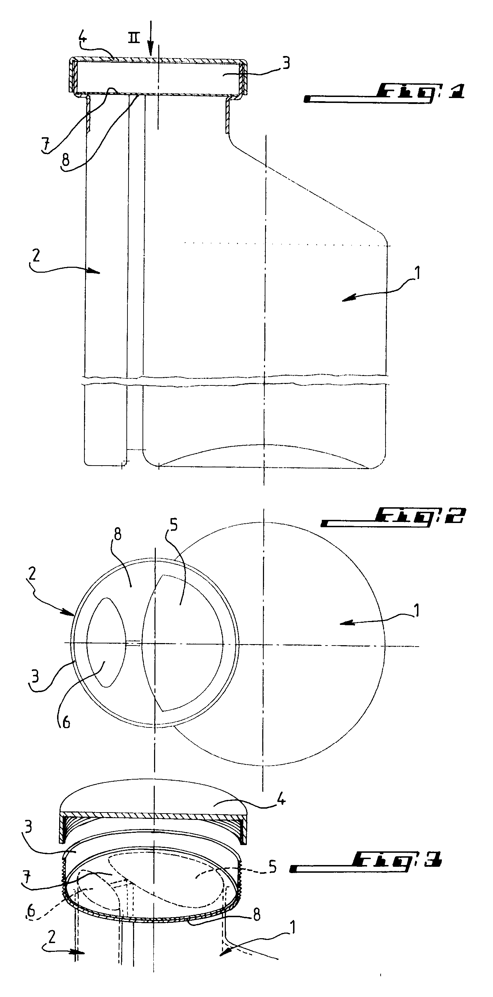

On a montré en 5 et 6 sur les figures 2 et 3 des orifices débouchants des compartiments 1 et 2 respectivement, ces orifices pouvant être obturés par un système de fermeture situé à l'intérieur du goulot 3.

Suivant un mode de réalisation préféré, ce système de fermeture est constitué par un opercule 7 qui est scellé sur une surface 8 appartenant au récipient et transversale au goulot 3, ladite surface 8 comportant les orifices débouchants 5, 6.

Comme il apparaît clairement sur la figure 3, l'opercule 7 est situé à l'intérieur du goulot 3, c'est-à-dire en dessous du bouchon 4, et cela de façon à laisser un espace entre la surface 8 et ledit bouchon 4, lequel espace permettra, après destruction ou enlèvement de l'opercule 7, la communication et le mélange des produits en secouant le récipient, comme on le décrira en détail plus loin.

L'un des compartiments, par exemple le compartiment 2 peut avoir une forme telle qu'il constituera une poignée de manutention du récipient.

On pourrait parfaitement, sans sortir du cadre de l'invention, prévoir pour le récipient un nombre de compartiments supérieur à deux.

Pour une meilleure compréhension de l'invention, on décrira brièvement ci-après comment s'utilise le récipient qui vient d'être décrit.

On partira de la position visible sur la figure 1 et dans laquelle les deux compartiments 1 et 2 contiennent chacun un produit différent, les orifices débouchants 5 et 6 des compartiments étant obturés par l'opercule 7 qui sert en même temps de garantie d'inviolabilité, et le bouchon 4 étant vissé sur le goulot 3.

Dans cet état, le récipient permet le transport des produits isolément, mais, il faut toutefois remarquer ici que le bouchon 4 ne joue, à ce stade, aucun rôle particulier, sinon d'hygiène et d'esthétique.

Pour réaliser le mélange des deux produits, on dévisse le bouchon 4, on retire ou on détruit l'opercule 7, et on revisse le bouchon 4. On secoue alors, à la manière d'un shaker, le récipient, de sorte que les produits dans les compartiments 1 et 2 vont se mélanger dans l'espace à l'intérieur du goulot 3 entre la surface 8 comportant les orifices 5 et 6, et le fond du bouchon 4.

Une fois le mélange effectué, il suffit de dévisser à nouveau le bouchon 4, ce qui permet de libérer le mélange du récipient.

On observera ici que par exemple dans le cas d'un mélange eau et poudre de lait pour nourrissons, le bouchon 4, pourra au moment de l'utilisation, être remplacé par une tétine.

A cet égard, on notera que le récipient selon cette invention permettra de réaliser des mélanges quelconques alcoolisés ou non et tels que des mélanges eau plus alcool, eau plus poudre, eau plus sirops etc....

Un tel récipient pourra être chauffé, par exemple dans un four micro-ondes, lorsque les produits mélangés doivent être consommés chauds.

On a donc réalisé suivant l'invention un récipient pour le transport et le mélange de produits quelconques, qui peut comporter un nombre de compartiments quelconques et possèder une forme quelconque, et qui est d'une fabrication peu coûteuse et demeure d'un usage très commode, en particulier pour les produits devant être mélangés juste avant leur utilisation ou leur consommation.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Récipient pour le transport et le mélange de produits quelconques et du type comprenant au moins deux compartiments (1, 2) aptes à recevoir chacun un produit à mélanger avec le produit se trouvant dans l'autre compartiment, ces deux compartiments débouchant dans une partie du récipient qui forme une zone de communication entre ces deux compartiments et qui est constituée par un goulot (3) commun aux deux compartiments (1,2) et obturé par un bouchon amovible (4), caractérisé en ce que les orifices débouchant (5,6) des deux compartiments (1, 2) sont obturés par un opercule (7) scellé sur une surface (8) transversale au goulot (3) et comportant les orifices débouchant (5,6), ledit opercule étant situé à l'intérieur du goulot (3) et en dessous du bouchon (4) de façon à laisser un espace entre la surface (8) et ledit bouchon (4).

2. Récipient selon la revendication 1, caractérisé en ce que l'un (2) des compartiments forme poignée de manutention du récipient.

3. Récipient à au moins deux compartiments selon l'une des revendications précédentes, caractérisé en ce qu'il est obtenu par extrusion-soufflage d'une matière synthétique appropriée.
